# EUROPÄISCHE PATENTSCHRIFT

(11) **EP 0 409 253 B1**
(45) Veröffentlichungstag und Bekanntmachung des Hinweises auf die Patenterteilung: **30.08.1995**
(21) Anmeldenummer: 90113939.4
(22) Anmeldetag: 08.10.1987
(51) Int. Cl.: B29C 53/58, B29C 53/80, B29C 65/62, F16L 11/24

(54) **Verfahren zum Herstellen von Schläuchen, insbesondere von Hochtemperatur- oder Filterschläuchen**
Method for manufacturing hoses, particularly high-temperature or filter hoses
Procédé de fabrication de tubes, en particulier de tubes résistant à de hautes températures ou de tubes-filtres

(30) Priorität: 09.10.1986 DE 3634411; 07.07.1987 DE 3722393
(43) Veröffentlichungstag der Anmeldung: 23.01.1991
(62) Teilanmeldung aus: 87114731.0
(73) Patentinhaber: TAL-Lufttechnik GmbH, D-78224 Singen (DE)
(72) Erfinder: Klaus, Erich, D-7761 Moos 4 (DE)
(74) Vertreter: Weiss, Peter, Dr. rer.nat.

(56) Entgegenhaltungen:
- EP-A- 0 114 613
- DE-A- 1 964 142
- FR-A- 1 298 102
- FR-A- 2 269 417
- FR-A- 2 504 450
- US-A- 2 640 500
- US-A- 4 413 580

## Beschreibung

Die Erfindung betrifft ein verfahren zum Herstellen von Schläuchen, insbesondere Hochtemperatur- oder Filterschläuchen, aus einer Materialbahn, welche wendelförmig in sich selbst gewunden und vernäht wird.

Derartige Schläuche finden in vielen Bereichen der Industrie Anwendung, beispielsweise als Filterschläuche in Entstaubungsanlagen oder als Hochtemperaturschläuche in Einrichtungen zum Absaugen von Abgasen od. agl.. Diese Abgase weisen oftmals recht hohe Temperaturen auf, so daß an die Temperaturbeständigkeit des Schlauches erhebliche Anforderungen gestellt werden müssen. Entsprechende Schläuche sind in der US-A 3 554 237 und der FR-A 2 301 370 beschrieben.

Beim Herstellen des Schlauches, beispielsweise nach der FR-A 1 298 102, gleichgültig ob Hochtemperatur- oder Filterschlauch, besteht die Gefahr, daß sich der Schlauchdurchmesser je Windung der Materialbahn um zumindest die zweifache Dicke der Materialbahn erhöht, so daß nicht ein konstanter Schlauchdurchmesser erhalten bleibt. Derartiges geschieht beispielsweise bei einem Vernähen nach der US-A 2 640 500 oder der FR-A 1 298 102 und deutlich erkennbar auch nach der FR-A 2 269 417.

Um diesem zu begegnen, wird der Schlauch regelmäßig geknittert, was zum einen dem Schlauch ein unschönes Aussehen gibt und zum anderen seine Gebrauchsfähigkeit beeinträchtigt.

Diese Probleme stellen sich zwar insbesondere beim Hochtemperatur- und Filterschlauch, jedoch soll die vorliegende Erfindung keineswegs auf diese Schlaucharten beschränkt sein.

Der Erfinder hat sich zum Ziel gesetzt, ein Verfahren der o.g. Art zu entwickeln, bei dem auf einfache Weise Schläuche gleichen Durchmessers über ihre gesamte Länge hergestellt werden können, die unterschiedlichen Temperaturen standhalten und wenig verschleißanfällig sind.

Zur Lösung dieser Aufgabe führt, daß das Vernähen mit einem Stahlfaden, einem Aramidfaden oder einem teflonbeschichteten Glas-Silizium-Faden durchgeführt wird.

Dieser Nähfaden kann unterschiedlichen Temperaturanforderungen Rechnung tragen. Ein derartiger Nähfaden wird bevorzugt bei Temperaturen über 180° C verwendet.

Wenn ferner beim Vernähen eine sich zur vorangegangenen Naht hin erstreckende Falte in die Materialbahn eingenäht wird, wird vermieden, daß sich der Durchmesser des Schlauches während seiner Herstellung erhöht bzw. das Knitterfalten am Schlauch entstehen. Der Schlauch selbst kann so in hohem Maße dicht gehalten werden.

Zur Erzeugung der Falte findet beim Vernähen ein Einschlagen der Materialbahn statt. Dies geschieht über eine von einem Fuß und einem Auflager der Nähvorrichtung gebildete Stufe, der die Materialbahn folgt.

Weiterhin ist erfindungsgemäß vorgesehen, daß die Materialbahn durch Zusatzeinrichtungen zu einer möglichen Transportfläche in der Näheinrichtung durch die Näheinrichtung gezogen wird. Dies geschieht im Takt des Vernähens selbst.

Der Stabilität dienen insbesondere Drahtwicklungen, welche die Materialbahn umgeben und mit dieser vernäht oder beispielsweise in den Scheuerstreifen eingenäht sein können.

Auf diese erfindungsgemäße Weise lassen sich Schläuche von einem Durchmesser von 100 mm bis 800 mm Durchmesser herstellen, bei denen die Scheuerstreifen statt wie bisher in einem Abstand von 8 cm nur noch in einem Abstand von 4,5 cm gewickelt sind.

Da hierdurch auch die Drahtwicklung enger wird, wirkt sich dies günstig auf die Druckfestigkeit der Schläuche aus.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Figur 1: eine perspektivische Ansicht eines erfindungsgemäßen Schlauches;
- Figur 2: eine schematische Darstellung einer Frontansicht eines Schlauches während des Herstellungsvorganges;
- Figur 3: einen Querschnitt durch einen Nähmaschinenfuß und eine Auflage in Gebrauchslage.

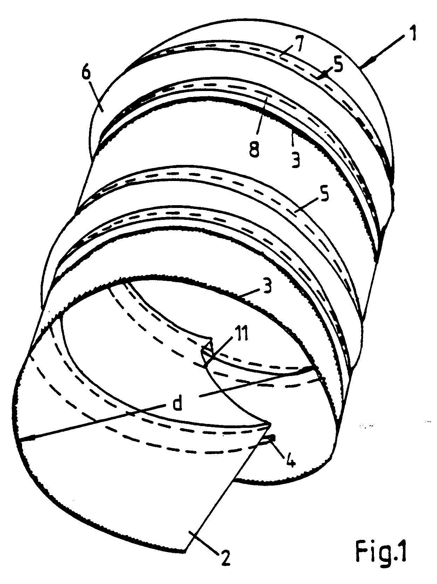

Ein Schlauch 1, insbesondere ein Filter- oder Hochtemperaturschlauch, besteht gemäß Figur 1 aus einer spiralig ineinander gewundenen Materialbahn 2, die randseitig mit einem Saum 3 belegt ist.

Zwischen die spiralig ineinander gewundene Materialbahn 2 ist ein ebenfalls spiralig gewundener Draht 4 eingelegt, der an der Außenfläche der Materialbahn von einem Scheuerstreifen 5 begleitet wird. Hierzu ist an dem Scheuerstreifen 5 eine kanalartige Wölbung 6 ausgebildet und beidseits eine Naht 7 bzw. 8 zum Verbinden mit dem Schlauch 1 vorgesehen.

Soll nur ein Filterschlauch hergestellt werden, so besteht die Materialbahn 2 aus einem herkömmlichen Filtergewebe, welches je nach Anforderungen wechseln kann. Bei einem Hochtemperaturschlauch soll die Materialbahn 2 im gezeigten Ausführungsbeispiel dagegen zweilagig sein, wobei sich das Material der Lagen je nach zu ertragenden Temperaturen unterscheidet.

Als Fäden für die Naht 7 und 8 bis 400°C können beispielsweise Nomex-Fäden Anwendung finden, bei höheren Temperaturen werden die Fäden aus Stahl oder mit Teflon beschichtetem Glas-Silizium benutzt.

Die Scheuerstreifen 5 bestehen in diesem Temperaturbereich aus Nomex-Papier, welches beispielsweise aus Aramidfasern oder -flocken hergestellt ist.

Beim Zusammennähen der Materialbahn 2 muß darauf geachtet werden, daß der Schlauch, gleichgültig ob Filter- oder Hochtemperaturschlauch, trotz des spiraligen Aufbaus einen gleichbleibenden Durchmesser d beibehält.

Hierzu wird erfindungsgemäß in die Materialbahn 2 im Inneren des Schlauches 1 eine Falte 11 eingenäht, die beim Nähen des Schlauches 1 selbst erzeugt wird. Hierzu dient eine besondere Ausgestaltung einer entsprechenden Nähvorrichtung 12. Wie bei bekannten Nähmaschinen weist diese Nähvorrichtung 12 einen Fuß 13 zum Auflegen auf die Materialbahn 2 auf. Unter dem Fuß 13 ist ein Auflager 14 für die Materialbahn 2 vorgesehen.

In dem Auflager befindet sich eine sich in Transportrichtung bewegende Transportfläche 15. Durch den Fuß 13 wird die Nadel 16 an einem Nadelhalter 17 geführt.

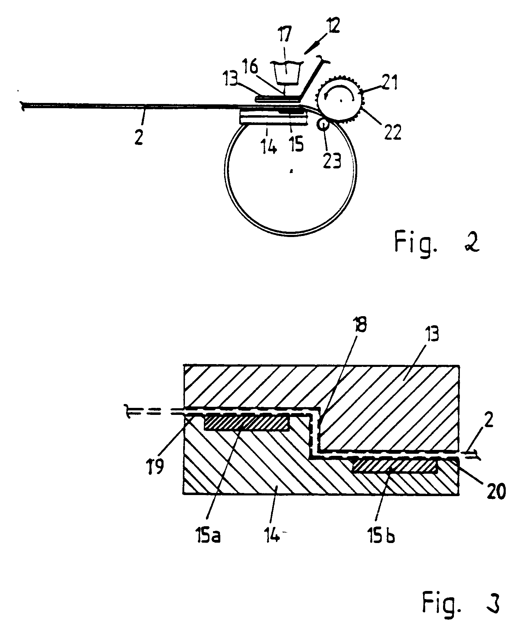

Aus Figur 3 ist erkennbar, daß sowohl Auflager 14 wie auch Fuß 13 eine Stufe 18 aufweisen. Beide Stufenebenen 19 und 20 haben eine eigene Transportfläche 15a und 15b. Durch die Stufe 18 wird die Falte 11 beim Nähen selbst gebildet und eingefaßt.

Da in der Regel die Transportflächen 15a und 15b nicht ausreichen, um die relativ schwere Materialbahn 2 zusammen mit dem Scheuerstreifen 5 zu transportieren, ist erfindungsgemäß nachfolgend an die Näheinrichtung 12 eine Transportwalze 21 vorgesehen, deren Umfangsfläche aufgerauht, beispielsweise mit Stacheln 22 besetzt, ist. Die Transportwalze 21 wirkt mit einer Gegenrolle 23 zusammen, wobei die Materialbahn 2 zwischen Gegenrolle 23 und Transportwalze 21 geführt wird.

Insbesondere durch das Faltennähen ist die Steigung der Spirale relativ gering und zwar etwa 4,5 cm, was sich äußerst günstig auf die Stabilität des Schlauches 1 auswirkt.

## Patentansprüche

1. Verfahren zum Herstellen von Schläuchen, insbesondere Hochtemperatur- oder Filterschläuchen, aus einer Materialbahn, welche wendelförmig in sich selbst gewunden und vernäht wird,
dadurch gekennzeichnet,
daß das Vernähen mit einem
Stahlfaden, einem Aramidfaden oder einem teflonbeschichteten Glas-Silizium-Faden durchgeführt wird.

2. Verfahren nach Anspruch 1, dadurch gekennzeichnet, daß beim Vernähen eine sich zur vorangegangenen Naht hin erstreckende Falte in die Materialbahn eingenäht wird.

3. Verfahren nach Anspruch 2, dadurch gekennzeichnet, daß kurz vor dem Vernähen ein Einschlagen der Materialbahn zur Faltenbildung über eine von einem Fuß und einem Auflager einer Nähvorrichtung gebildete Stufe erfolgt.

4. Verfahren nach Anspruch 2 oder 3, dadurch gekennzeichnet, daß die Materialbahn im Takt des Vernähens aus der Näheinrichtung gezogen wird.

5. Verfahren nach wenigstens einem der Ansprüche 1 bis 4, dadurch gekennzeichnet, daß beim Nähen des Schlauches ein Scheuerstreifen auf- und/oder ein Draht in die Materialbahn eingenäht wird.

## Claims

1. Method of producing hoses, more especially high-temperature or filter hoses, from a web of material which is helically wound around itself and stitched, characterised in that the stitching is effected with a steel thread, an aramide thread or a teflon-coated glass silicon thread.

2. Method according to claim 1, characterised in that a fold, which extends towards the preceding seam, is stitched into the web of material during the stitching operation.

3. Method according to claim 2, characterised in that the web of material for forming the fold is inserted via a step formed from a foot and a support of a sewing device shortly prior to the stitching operation.

4. Method according to claim 2 or 3, characterised in that the web of material is drawn from the sewing device in time with the stitching.

5. Method according to at least one of claims 1 to 4, characterised in that an abrasive strip is stitched onto the web of material and/or a wire is stitched into the web of material when the hose is being sewn.

## Revendications

1. Procédé de fabrication de tubes, en particulier de tubes résistant à des hautes températures ou de tubes filtres, formés à partir d'une bande de matière enroulée sur elle-même en hélice et cousine, caractérisé en ce que la couture est effectuée avec un fil d'acier, un fil d'aramide ou un fil de verre-silicium revêtu de Téflon.

2. Procédé selon la revendication 1, caractérisé en ce qu'au moment de la couture on coud dans la bande de matière un pli qui s'étend jusqu'à la couture précédente.

3. Procédé selon la revendication 2, caractérisé en ce que directement avant d'effectuer la couture on rabat la bande de matière pour former un pli, par-dessus un échelon formé par un talon et un appui d'un dispositif de couture.

4. Procédé selon la revendication 2 ou 3, caractérisé en ce que la bande de matière est tirée de l'installation de couture à la cadence de l'opération de couture.

5. Procédé selon au moins l'une des revendications 1 à 4, caractérisé en ce que lorsqu'on coud le tuyau on intègre dans la couture une bande de frottement et/ou un fil dans la bande de matière.
